# EUROPÄISCHE PATENTSCHRIFT

(11) **EP 1 749 224 B1**
(45) Veröffentlichungstag und Bekanntmachung des Hinweises auf die Patenterteilung: **02.09.2009**
(21) Anmeldenummer: 05755133.5
(22) Anmeldetag: 12.05.2005
(51) Int. Cl.: G02B 6/00, F21V 8/00

(54) **VERFAHREN ZUR MONTAGE EINES OBERFLÄCHENLEUCHTSYSTEMS UND OBERFLÄCHENLEUCHTSYSTEM**
METHOD FOR MOUNTING A SURFACE LIGHTING SYSTEM AND SURFACE LIGHTING SYSTEM
PROCEDE DE MONTAGE D'UN SYSTEME LUMINEUX DE SURFACE, ET SYSTEME LUMINEUX DE SURFACE

(30) Priorität: 24.05.2004 DE 102004025414; 24.09.2004 DE 102004046696
(43) Veröffentlichungstag der Anmeldung: 07.02.2007
(73) Patentinhaber: OSRAM Opto Semiconductors GmbH, 93055 Regensburg (DE)
(72) Erfinder: LANG, Kurt-Jürgen, 94209 Regen (DE); OTT, Hubert, 93077 Bad Abbach (DE); PLÖTZ, Ludwig, 93473 Arnschwang (DE); POH, Christian, 93093 Donaustauf (DE); WANNINGER, Mario, 93055 Harting (DE)
(74) Vertreter: Epping - Hermann - Fischer
(86) Internationale Anmeldenummer: PCT/DE2005/000875
(87) Internationale Veröffentlichungsnummer: WO 2005/114273

(56) Entgegenhaltungen:
- US-A1- 2003 067 577
- US-B1- 6 241 358
- US-B2- 6 697 130
- PATENT ABSTRACTS OF JAPAN Bd. 2003, Nr. 12, 5. Dezember 2003 (2003-12-05) -& JP 2004 127220 A (AISIN ENGINEERING KK), 22. April 2004 (2004-04-22)

## Beschreibung

Die Erfindung betrifft ein Verfahren zur Montage eines Oberflächenleuchtsystems und ein Oberflächenleuchtsystem

Für Oberflächenleuchtsysteme gibt es vielfältige Anwendungsmöglichkeiten. Sie können beispielsweise als Leuchtmittel in Lampen oder Designanordnungen dienen. Insbesondere können Oberflächenleuchtsysteme zur Hinterleuchtung von Displays wie Liquid-Crystal-Displays (LCD-Displays) eingesetzt werden.

Aus den Druckschriften US 6,646,367 B2 und US 6,241,358 B1 sind beispielsweise Oberflächenleuchtsysteme bekannt, die kaskadenförmig aus mehreren Lichtleitern aufgebaut sind, in die jeweils seitlich primäre Strahlungsquellen einkoppeln. In den Druckschriften werden jedoch keine Montagekonzepte zur Herstellung solcher Oberflächenleuchtsysteme offenbart.

Die Druckschrift US 6,697,130 B2 offenbart eine mit Leuchtdioden bestückte flexible Leiterplatte zur Hinterleuchtung einer Flüssigkristallanzeige. Die Leuchtdioden sind auf einer Mehrzahl von gefalteten Abschnitten der flexiblen Leiterplatte angeordnet und strahlen von verschiedenen Seiten in einen Lichtleiter.

Die Druckschrift US 2003/0067577 A1 betrifft ein Herstellungsverfahren für eine Flüssigkristallanzeige, bei der ein streifenförmiger Abschnitt in einem flexiblen Substrat mittels eines Schnittes hergestellt wird. Auf dem streifenförmigen Abschnitt werden Leuchtdioden montiert. Ein Lichtleiter wird auf die flexible Leiterplatte aufgesetzt und der streifenförmige Abschnitt nachfolgend so über den Lichtleiter gefaltet, dass die Leuchtdioden in den Lichtleiter einstrahlen.

Aufgabe der vorliegenden Erfindung ist es, ein verbessertes und technisches einfaches Verfahren zur Montage eines Oberflächenleuchtsystems und ein solches Oberflächenleuchtsystem anzugeben.

Diese Aufgabe wird durch ein Verfahren mit den Schritten gemäß Patentanspruch 1 und ein Oberflächenleuchtsystem mit den Merkmalen gemäß Patentanspruch 12 gelöst.

Vorteilhafte Ausführungsformen des Verfahrens bzw. des Oberflächenleuchtsystems sind in den Unteransprüchen 2 bis 7 bzw. 13 bis 17 angegeben.

Ein Verfahren zur Montage eines Oberflächenleuchtsystems mit einer elektromagnetische Strahlung emittierenden Vorderseite umfasst die Schritte:
- Anbringen mindestens einer primären Strahlungsquelle, die geeignet ist im Betrieb elektromagnetische Strahlung zu emittieren, auf mindestens einem Montagebereich eines flexiblen Trägers mit einer Vorderseite und einer der Vorderseite gegenüberliegenden Rückseite, wobei die Vorderseite des flexiblen Trägers eine Bezugsebene festlegt,
- Biegen des Montagebereichs des flexiblen Trägers aus der Bezugsebene heraus, derart dass eine optische Achse der primären Strahlungsquelle parallel oder schräg zur Bezugsebene verläuft,
- Anbringen des flexiblen Trägers auf einem starren Träger, wobei die Rückseite des flexiblen Trägers dem starren Träger zugewandt ist, und
- Anbringen von mindestens einem Lichtleitleiter mit einer Strahlung emittierenden Vorderseite und mindestens einem Einkoppelbereich an dem flexiblen Träger derart, dass die primäre Strahlungsquelle im Betrieb des Oberflächenleuchtsystems in den Einkoppelbereich des Lichtleiters einstrahlt und die Strahlung emittierende Vorderseite des Lichtleiters in Richtung der Strahlung emittierenden Vorderseite des Oberflächenleuchtsystems weist.

Wird die primäre Strahlungsquelle auf den Montagebereich eines flexiblen Trägers angebracht, kann die primäre Strahlungsquelle auf einfache Weise durch Biegen des Montagebereiches einfach in die gewünschte Position gebracht werden, um in den Lichtleiter einzukoppeln. Bevorzugt befindet sich der Montagebereich im Randbereich des flexiblen, so dass ein schmaler Bereich des flexiblen Trägers hochgebogen wird.

Insbesondere eignet sich das Verfahren zur Montage von Oberflächenleuchtsystemen, die mehrere Lichtleiter umfassen, in die jeweils eine oder mehrere primäre Strahlungsquellen einkoppeln. Hierzu können ein Lichtleiter und die primären Strahlungsquellen, die vorgesehen sind, in den Einkoppelbereich des Lichtleiters einzustrahlen auf jeweils einen flexiblen Träger montiert werden. Diese Anordnung bildet im Wesentlichen eine Lichtkachel. Eine Lichtkachel kann auch noch weitere Element beinhalten, wie beispielsweise optisch wirksame Element zur gezielten Strahlungsverteilung innerhalb des Lichtleiters und zur gezielten Beeinflussung der Abstrahlcharakteristik des Oberflächenleuchtsystems.

Weiterhin kann eine Lichtkachel beispielsweise elektronische Bauteile und Leiterbahnen zur Ansteuerung der primären Strahlungsquellen oder des Oberflächenleuchtsystems, sowie Kühlkörper umfassen.

Die Lichtkacheln werden auf dem starren Träger montiert und bilden das Grundgerüst für ein Oberflächenleuchtsystem. Bei dem starren Träger kann es sich beispielsweise um eine Displayrückwand handeln. Durch den modularen Aufbau des Oberflächenleuchtsystems aus mehreren Lichtkacheln, die jeweils einzeln mit Licht primärer Strahlungsquellen versorgt werden, ist es möglich, Displays mit nahezu beliebiger Größe und vielfältigen Geometrien bei gleichzeitig weitestgehend homogener Abstrahlcharakteristik herzustellen.

Es sei an dieser Stelle darauf hingewiesen, dass die Schritte des Verfahrens nicht in der festgelegten Reihenfolge durchgeführt werden müssen. So kann beispielsweise der Lichtleiter vor oder nach dem Anbringen des flexiblen Trägers an dem starren Träger angebracht werden. Welche Ausführungsform des Verfahrens vorteilhaft ist hängt beispielsweise von einzelnen Montageprozessen und der Prozessführung ab.

Bei einer besonders bevorzugten Ausführungsform des Verfahrens werden auf dem flexiblen Träger elektronische Bauteile, Leiterbahnen und/oder Kühlkörper angebracht. Hierdurch können zum einen Treiberbausteine und andere elektronische Bausteine zur Ansteuerung der primären Strahlungsquelle, wie auch des gesamten Oberflächenleuchtsystems einfach untergebracht werden. Zum anderen erlaubt die Anbringung von Kühlkörpern, wie beispielsweise ein dünner metallischer Streifen, an dem flexiblen Träger, Wärme abzuleiten, die beim Betrieb des Oberflächenleuchtsystems entsteht. Besonders bevorzugt werden Kühlkörper so angebracht, dass sie die Wärme abtransportieren können, die beim Betrieb der primären Strahlungsquelle entsteht. Diese Ausführungsform ermöglicht insbesondere eine besondere kompakte und leichte Bauweise des Oberflächenleuchtsystems.

Weiterhin besonders bevorzugt wird als flexibler Träger eine flexible Leiterplatte verwendet. Dies bietet den Vorteil, dass die elektronischen Bauteile und Leiterbahnen einfach integriert werden können. So können beispielsweise oberflächenmontierbare elektronische Bauteile auf die mit gedruckten Leiterbahnen versehene Leiterplatte geklebt oder gelötet werden.

Bei einer weiteren bevorzugten Ausführungsform des Verfahrens wird mittels Schlitzen des flexiblen Trägers mindestens ein Montagebereich geschaffen, in den nachfolgend zunächst die primäre Strahlungsquelle angebracht wird. Dieser Montagebereich wird in einem weiteren nachfolgenden Schritt derart aus der Bezugsebene gebogen, dass die primäre Strahlungsquelle in den Einkoppelbereich eines Lichtleiters einstrahlt, der vor oder nach dem Biegen des Montagebereiches auf den flexiblen Träger aufgesetzt wird.

Vorzugsweise erfolgt das Schlitzen des flexiblen Trägers durch Stanzen.

Bevorzugt werden bei dieser Ausführungsform mehrere Montagebereiche innerhalb des flexiblen Träger geschaffen, wie beispielsweise schmale Streifen. Auf diesen können nachfolgend jeweils die mindestens eine primäre Strahlungsquelle befestigt werden. Nach dem Befestigen der primären Strahlungsquellen werden die Montagebereiche aus der Bezugsebene gebogen, sodass sich die jeweilige primäre Strahlungsquelle wiederum an der gewünschten Position befinden, um in den jeweiligen Lichtleiter einzustrahlen.

Bei dieser Ausführungsform werden die funktionalen Teile einer Lichtkachel, wie beispielsweise der Lichtleiter mit der/den zugehörigen primären Strahlungsquelle(n), Kühlkörper und weiteren elektronische Bausteine, nicht auf jeweils einem separaten flexiblen Träger montiert, sondern es können die funktionalen Teile mehrerer Lichtkacheln auf einem einzigen gemeinsamen flexiblen Träger angebracht werden. Insbesondere können alle Lichtleiter und alle primären Strahlungsquellen eines Oberflächenleuchtsystems auf einem einzigen gemeinsamen flexiblen Träger angebracht werden.

Dies bietet den Vorteil, dass die Anzahl an elektronischen Bauteilen minimiert werden kann, die zur Ansteuerung der primären Strahlungsquellen benötigt werden. Weiterhin kann auf elektrische Anschlussstellen zwischen den einzelnen flexiblen Trägern verzichtet werden.

Bei dem erfindungsgemäßen Verfahren werden auf dem starren Träger Strukturen aufgebracht, durch die der Montagebereich des flexiblen Trägers beim Aufsetzen des flexiblen Trägers auf den starren Träger aus der Bezugsebene in die gewünschte Position gebogen wird. Dieses Verfahren bietet Vorteile aus prozesstechnischer Sicht und vereinfacht daher die Umsetzung des Verfahrens in der Praxis.

Bei einer weiteren bevorzugten Ausführungsform des Verfahrens wird als primäre Strahlungsquelle ein Leuchtdiodenbauelement (kurz "LED") verwendet. Sie bieten den Vorteil hoher Lichtausbeute sowie eine kompakte Bauweise und wenig Gewicht.

Bei einer weiteren Ausführungsform des erfindungsgemäßen Verfahrens werden mindestens zwei Lichtleiter verwendet, die vorteilhafterweise in benachbarten Randbereichen mit einem optischen Koppelmedium verbunden werden. Als optisches Koppelmedium sind Materialien geeignet, die ähnliche optische Eigenschaften, wie das Material der Lichtleiter hat. Hierdurch kann Strahlung möglichst ungehindert von einem Lichtleiter in den benachbarten gelangen, was die Abstrahlcharakteristik des Oberflächenleuchtsystems verbessert. Werden die Randbereiche benachbarter Lichtleiter vergossen oder verklebt kann dies weiterhin zur mechanischen Stabilität des Oberflächenleuchtsystems beitragen.

Bei einer weiteren bevorzugten Ausführungsform des Verfahrens werden auf der Strahlung emittierenden Vorderseite der Lichtleiter mindestens eine strahlungsdurchlässige Folie aufgebracht. Dies trägt ebenfalls zur Verbesserung der mechanischen Stabilität des Lichtleiterverbundes bei.

Weiterhin wird bevorzugt eine optisch wirksame Folie aufgebracht, die die Abstrahlcharakteristik des Oberflächenleuchtsystems in einer gewünschten Weise beeinflusst. So kann die optisch wirksame Folie beispielsweise prismenförmige Strukturen an der Oberfläche aufweisen, rückseitig einfallendes Licht in Richtung der Flächennormalen der Strahlung emittierenden Vorderseite lenkt.

Ein Oberflächenleuchtsystem gemäß der Erfindung umfasst insbesondere:
- mindestens eine primäre·Strahlungsquelle, die geeignet ist, im Betrieb elektromagnetische Strahlung zu emittieren,
- mindestens einen flexiblen Träger mit einer Vorderseite und einer der Vorderseite gegenüberliegenden Rückseite und mit mindestens einem Montagebereich auf dem vorderseitig die primäre Strahlungsquelle angebracht ist, wobei die Vorderseite des flexible Träger ausgenommen den Montagebereich eine Bezugsebene festlegt und der Montagebereich aus der Bezugsebene gebogen ist, derart das eine optische Achse der primären Strahlungsquelle parallel oder in einem spitzen Winkel schräg zur Bezugsebene verläuft,
- einem starren Träger auf dem der flexible Träger angebracht ist, so dass die Rückseite des flexiblen Trägers zu dem starren Träger weist, und
- mindestens einem Lichtleiter mit einer Strahlung emittierenden Vorderseite und mindestens einem Einkoppelbereich, der an dem flexiblen Träger derart angebracht ist, dass die primäre Strahlungsquelle im Betrieb des Oberflächenleuchtsystems in den Einkoppelbereich des Lichtleiters einstrahlt und die Strahlung emittierende Vorderseite des Lichtleiters in Richtung der Strahlung emittierenden Vorderseite des Oberflächenleuchtsystems weist, Sowie die starren Trägerstrukturen/Stützelemente, die Teile des flexiblen Trägers aus der Bezugsebene heraus biegen und halten.

Bevorzugt weist das Oberflächenleuchtsystem eine flexible Leiterplatte als Träger und ein Leuchtdiodenbauelement als primäre Strahlungsquelle auf.

Weiterhin umfasst der flexible Träger des Oberflächenleuchtsystems ebenfalls bevorzugt elektronische Bauteile, Leiterbahnen und/oder Kühlkörper.

Umfasst das Oberflächenleuchtsystem mindestens zwei Lichtleiter so sind benachbarte Randbereiche der Lichtleiter besonders bevorzugt mit einem optischen Koppelmedium verbunden.

Bei einer weiteren bevorzugten Ausführungsform des Oberflächenleuchtsystems weist die Strahlung emittierende Vorderseite vorzugsweise eine strahlungsdurchlässige Folie auf.

Weitere Vorteile und vorteilhafte Ausführungsformen des Verfahrens zur Montage des Oberflächenleuchtsystems ergeben sich aus den im folgenden in Verbindung mit den Figuren 1a bis 1b,2a bis 2e, 3a bis 3b und 4a bis 4b näher erläuterten Ausführungsbeispielen.

### Es zeigen:

Figur 1a, eine schematische Draufsicht auf eine flexible Leiterplatte mit primären Strahlungsquellen, elektronischen Bauteilen und seitlichen Anschlussstellen vor dem Biegen der Montagebereiche,
Figur 1b, eine schematische Schnittansicht durch die flexible Leiterplatte aus Figur 1a,
Figur 2a, eine schematische Draufsicht auf mehrere flexible Leiterplatten wie in Figur 1a, die auf einem starren Träger angebracht sind,
Figur 2b, eine schematische Draufsicht auf ein flexible Leiterplatte auf einem starren Träger,
Figur 2c, eine schematische Draufsicht auf die flexible Leiterplatte von Figur 2b nach dem Biegen der Montagebereiche,
Figur 2d, eine schematische Schnittansicht durch einen Bereich der flexiblen Leiterplatte von Figur 2c,
Figur 2e, eine schematische Draufsicht auf ein Oberflächenleuchtsystem mit einem flexiblen Träger gemäß Figur 2c wie oder 2a nach dem Aufsetzten mehrerer Lichtleiter,
Figuren 3a und 3b, schematische Schnittansichten durch zwei Varianten eines Oberflächenleuchtsystem gemäß Figur 2e,
Figuren 4a und 4b, schematische Draufsichten auf weitere Ausführungsbeispiele der flexiblen Leiterplatte.

In den Ausführungsbeispielen und Figuren sind gleiche oder gleichwirkende Bestandteile jeweils mit dem gleichen Bezugszeichen versehen. Die dargestellten Elemente der Figuren sind nicht als maßstabsgerecht anzusehen. Vielmehr können sie zum besseren Verständnis teilweise übertrieben groß dargestellt sein.

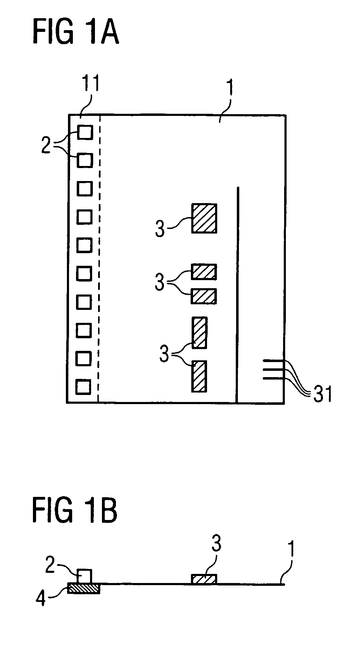

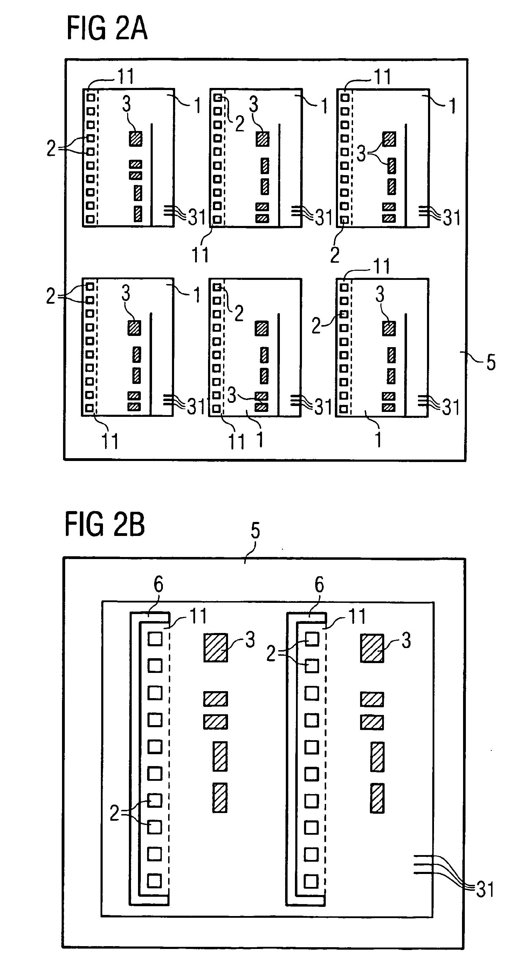

Gemäß einem ersten Ausführungsbeispiel (vergleiche Figur la) des Verfahrens werden auf einer flexiblen Leiterplatte 1 am Rand primäre Strahlungsquellen 2 beispielsweise LEDs in einer Reihe befestigt und mit elektrischen Leiterbahnen elektrisch kontaktiert. Weiterhin werden auf der flexiblen Leiterplatte 1 weitere elektronische Bauteile 3, wie beispielsweise Treiberbausteine zur Steuerung der LEDs 2, befestigt und seitlich Anschlussstellen 31 zu elektrischen Kontaktierung ausgebildet. Auf der den LEDs 2 gegenüberliegenden Seite der flexiblen Leiterplatte 1 werden Kühlkörper 4 (vergleiche Figur 1b) angebracht um die Verlustwärme abzuleiten, die beim Betrieb der LEDs 2 entsteht. In einem nachfolgenden Schritt des Verfahrens werden mehrere der so bestückten flexiblen Leiterplatten 1 auf einem starren Träger 5 angebracht (vergleiche Figur 2a).

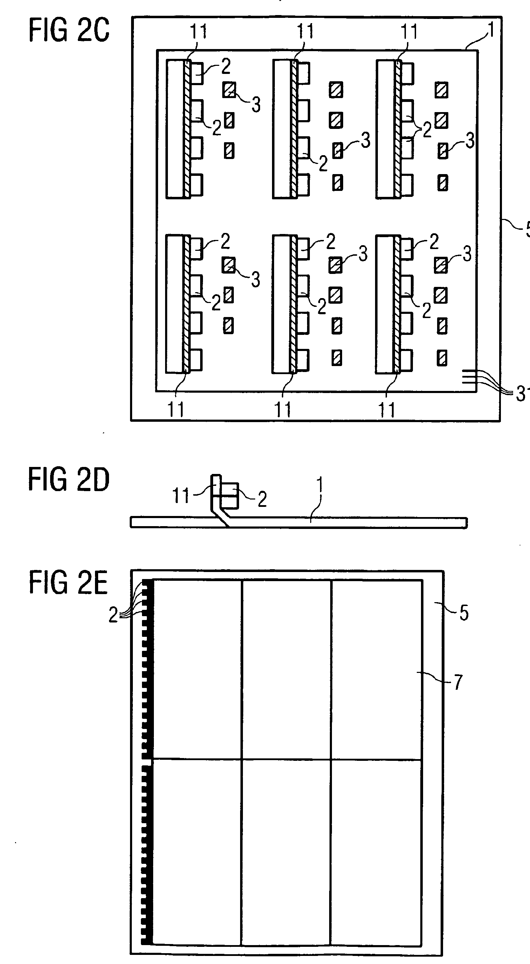

Bei einem zweiten Ausführungsbeispiel werden in einer flexiblen Leiterplatte 1 Schlitze 6 derart ausgebildet, dass jeweils durch drei zusammenhängende Schlitze 6 ein rechteckiger schmaler Montagebereich 11 gebildet wird, der an einer Seite mit dem Rest der flexiblen Leiterplatte 1 verbunden bleibt, (vergleiche Figur 2b). Innerhalb dieser Montagebereiche 11 werden jeweils mehrere LEDs 2 wiederum in einer Reihe angebracht. Wie bei dem weiter oben bereits in Verbindung mit den Figuren 1a und 1b beschriebenen Ausführungsbeispiel sind auf der flexiblen Leiterplatte 1 weiter elektronische Bauteile 3 angeordnet. In einem nachfolgenden Verfahrensschritt werden die schmalen rechteckigen Montagebereiche 11 auf die die LEDs 2 aufgebracht sind, so aufgebogen, dass sich die LEDs 2 in der gewünschten Position befinden um später im Betrieb Strahlung in einen nachfolgend aufgesetzten Lichtleiter 7 einzukoppeln. Die schmalen rechteckigen Bereiche 11 können beispielsweise so aufgebogen werden, dass sie im wesentlichen senkrecht zum Rest der flexiblen Leiterplatte 1 orientiert sind, wie in den Figuren 2c und 2d zu sehen. Auch bei dieser Ausführungsform wird die flexible Leiterplatte 1 auf einen starren Träger 5 montiert, wie beispielsweise eine Displayrückwand.

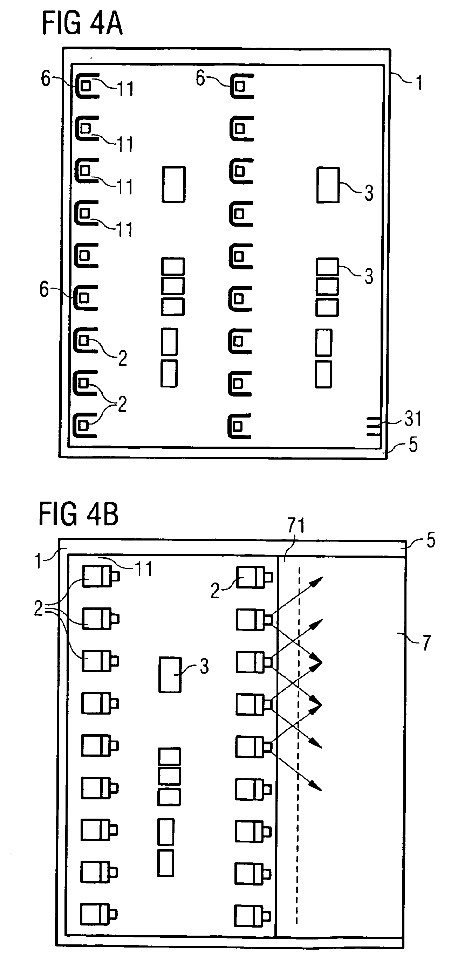

Bei eine weiteren Ausführungsbeispiels werden die Schlitze 6 innerhalb der flexiblen Leiterplatte so angebracht, dass rechteckige Montagebereiche 11 entstehen, in die jeweils nur eine LED 2 montiert wird (vergleiche Figuren 4a und 4b).

In einem weiteren nachfolgenden Schritt werden auf die mit LEDs 2 bestückte und partiell gebogene Leiterplatte 1, Lichtleiter 7 aufgesetzt. Dies erfolgt so, dass die LEDs 2 im Betrieb jeweils einen Einkoppelbereich 71 eines Lichtleiters 7 einstrahlen und dass eine Strahlung emittierende Vorderseite 72 der Lichtleiter 7 von der flexiblen Leiterplatte 1 wegweist (vergleiche Figur 2e).

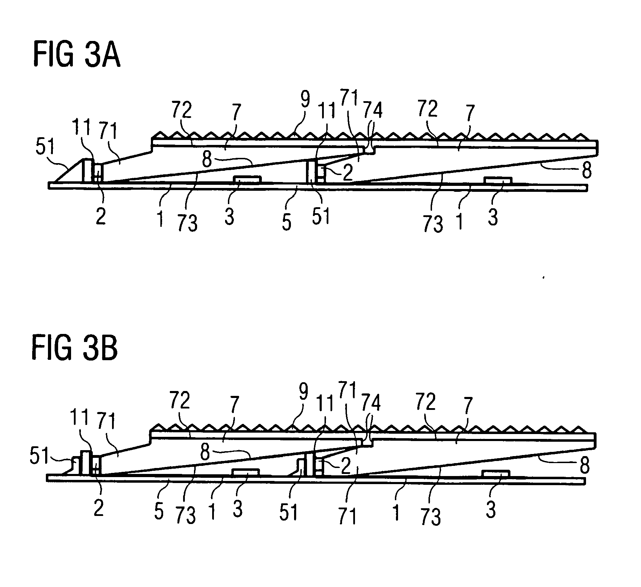

Gemäß der Erfindung (vergleiche Figuren 3a und 3b ) HWa sind an dem starren Träger 5 Stützelemente 51 ausgebildet, die die Montagebereiche 11 der flexiblen Leiterplatte 1 auf denen sich die LEDs 2 befinden beim Aufsetzen der flexiblen Leiterplatte 1 auf den starren Träger 5 in die gewünschte Position biegen und dort halten. Die Laschen 51 können beispielsweise aus der Hauptbezugsebene des starren Trägers 5 aufgebogene Laschen 51 sein. Vertikal aufgebogene Laschen 51 bieten den Vorteil, dass der Winkel zwischen dem aufgebogenen Bereich 11 der flexiblen Leiterplatte 1 und dem Rest der flexiblen Leiterplatte 1 und somit der Einstrahlwinkel der LED 2 in den Lichtleiter 7 einfach variiert werden kann. Weiterhin können die Laschen 51 so geformt sein, dass die flexible Leiterplatte auch daran befestigt werden kann.

Weiterhin sind bei diesem Ausführungsbeispiel auf der von der Strahlung emittierenden Vorderseite 72 abgewandten Rückseite 73 der Lichtleiter 7 diffus reflektierende Elemente 8 ausgebildet sein, wie beispielsweise diffus reflektierende Folien oder diffus reflektierende Strukturen.

Die Kanten der Lichtleiter 74 werden bei dem Ausführungsbeispiel gemäß den Figuren 3a und 3b verklebt oder vergossen. Als Vergussmasse oder Klebstoffe eignen sich insbesondere strahlungsdurchlässige Materialien, die vorzugsweise einen ähnlichen Brechungsindex besitzen, wie das Material der Lichtleiter 7. Als Klebstoffe können beispielsweise Epoxidsysteme verwendet werden.

Bei einem weiteren Ausführungsbeispiel werden auf der Vorderseite 72 der Lichtleiter 7 eine oder mehrere Folien 9 angebracht, die für die von dem Oberflächenleuchtsystem imitierte Strahlung weitestgehend durchlässig sind.

Bevorzugt handelt es sich hierbei um eine optisch wirksame Folie 9, die beispielsweise prismenförmige Strukturen an der Oberfläche trägt und die Auskoppelcharakteristik des Oberflächenleuchtsystems dadurch gezielt in einer gewünschten Weise beeinflusst.

Die Erfindung ist selbstverständlich nicht auf die Ausführungsbeispiele beschränkt, sondern umfasst alle Ausführungsvarianten von Oberflächenleuchtsystemen und Verfahren zur Montage eines solchen mit flexiblem Träger für die primären Strahlungsquellen, bei dem Montagebereiche auf dem sich die Strahlungsquellen befinden aus einer Haupterstreckungsebene des flexiblen Trägers heraus gebogen werden, um die Strahlungsquellen in die gewünschte Position zum Lichtleiter zu bringen, wobei für diesen Schritt ein starrer Träger mit starren Stützelementen vorhanden ist.

## Patentansprüche

1. Verfahren zur Montage eines Oberflächenleuchtsystems mit einer elektromagnetische Strahlung emittierenden Vorderseite mit den Schritten:
- Anbringen mindestens einer primären Strahlungsquelle (2), die geeignet ist im Betrieb elektromagnetische Strahlung zu emittieren, auf mindestens einem Montagebereich (11) eines flexiblen Trägers (1) mit einer Vorderseite und einer der Vorderseite gegenüberliegenden Rückseite, wobei die Vorderseite des flexiblen Trägers (1) eine Bezugsebene festlegt,
- Biegen des Montagebereichs (11) des flexiblen Trägers (1) aus der Bezugsebene heraus, derart dass eine optische Achse der primären Strahlungsquelle parallel oder schräg zur Bezugsebene verläuft,
- Anbringen des flexiblen Trägers (1) auf einem starren Träger (5), wobei die Rückseite des flexiblen Trägers (1) dem starren Träger (5) zugewandt ist, und
- Anbringen von mindestens einem Lichtleitleiter (7) mit einer Strahlung emittierenden Vorderseite (72) und mindestens einem Einkoppelbereich (71) an dem flexiblen Träger (1) derart, dass die primäre Strahlungsquelle (2) im Betrieb des Oberflächenleuchtsystems in den Einkoppelbereich (71) des Lichtleiters (7) einstrahlt und die Strahlung emittierende Vorderseite (72) des Lichtleiters (7) in Richtung der Strahlung emittierenden Vorderseite des Oberflächenleuchtsystems weist,
wobei auf dem starren Träger starre Stützelemente (51) ausgebildet sind, die den Montagebereich des flexiblen Träger beim Aufsetzen des flexiblen Trägers auf den starren Träger aus der Bezugsebene in die gewünschte Position biegen und dort halten.

2. Verfahren nach Anspruch 1, bei dem
der Lichtleiter (7) nach dem Anbringen des flexiblen Trägers (1) an dem starren Träger (5) an dem flexiblen Träger (1) angebracht wird.

3. Verfahren nach Anspruch 1, bei dem
der Lichtleiter (7) vor dem Anbringen des flexiblen Trägers (1) an dem starren Träger (5) an dem flexiblen Träger (1) angebracht wird.

4. Verfahren nach einem der obigen Ansprüche, bei dem auf dem flexiblen Träger (1) elektronische Bauteile (3), Leiterbahnen und/oder Kühlkörper (4) angebracht werden.

5. Verfahren nach einem der obigen Ansprüche, bei dem als flexibler Träger (1) eine flexible Leiterplatte verwendet wird.

6. Verfahren nach einem der obigen Ansprüche, bei dem
- durch Anbringen von Schlitzen (6) innerhalb des flexiblen Trägers (1) gezielt mindestens ein Montagebereich (11) geschaffen wird,
- die primäre Strahlungsquelle (2) in dem Montagebereich (11) angebracht wird, und
- der Montagebereich (11) aus der Bezugsebene gebogen wird.

7. Verfahren nach Anspruch 6, bei dem die Schlitze (6) durch Stanzen angebracht werden.

8. Verfahren nach einem der obigen Ansprüche, bei dem die Stützelemente (51) aus einer Hauptbezugsebene des starren Trägers (5) aufgebogene Laschen sind.

9. Verfahren nach einem der obigen Ansprüche, bei dem als primäre Strahlungsquelle (2) ein Leuchtdiodenbauelement verwendet wird.

10. Verfahren nach einem der obigen Ansprüche, bei dem mindestens zwei Lichtleiter (7) verwendet werden und benachbarte Randbereiche (74) der Lichtleiter (7) untereinander mit einem optischen Koppelmedium verbunden werden.

11. Verfahren nach einem der obigen Ansprüche, bei dem auf die Strahlung emittierende Vorderseite (72) des Lichtleiters (7) mindestens eine strahlungsdurchlässige Folie (9) aufgebracht wird.

12. Oberflächenleuchtsystem mit einer Strahlung emittierenden Vorderseite mit:
- mindestens einer primären Strahlungsquelle (2), die geeignet ist, im Betrieb elektromagnetische Strahlung zu emittieren,
- einem starren Träger (5), auf dem starre Stützelemente (51) ausgebildet sind,
- mindestens einem flexiblen Träger (1) mit einer Vorderseite und einer der Vorderseite gegenüberliegenden Rückseite und mit mindestens einem Montagebereich (11) auf dem vorderseitig die primäre Strahlungsquelle (2) angebracht ist, wobei der flexible Träger auf dem starren Träger angebracht ist, so dass die Rückseite des flexiblen Trägers (1) zu dem starren Träger (5) weist, die Vorderseite des flexiblen Trägers (1) ausgenommen den Montagebereich (11) eine Bezugsebene festlegt und der Montagebereich (11) mittels der starren Stützelemente aus der Bezugsebene in eine gewünschte Position gebogen und dort gehalten ist, derart dass eine optische Achse der primären Strahlungsquelle (2) parallel oder schräg zur Bezugsebene verläuft, und
- mindestens einem Lichtleiter (7) mit einer Strahlung emittierenden Vorderseite (72) und mindestens einem Einkoppelbereich (71), der an dem flexiblen Träger (1) derart angebracht ist, dass die primäre Strahlungsquelle (2) im Betrieb des Oberflächenleuchtsystems in den Einkoppelbereich (71) des Lichtleiters (7) einstrahlt und die Strahlung emittierende Vorderseite (72) des Lichtleiters (7) in Richtung der Strahlung emittierenden Vorderseite des Oberflächenleuchtsystems weist.

13. Oberflächenleuchtsystem nach Anspruch 12 mit einer flexiblen Leiterplatte als flexiblen Träger.

14. Oberflächenleuchtsystem nach einem der Ansprüche 12 bis 13, mit einem Leuchtdiodenbauelement als primäre Strahlungsquelle.

15. Oberflächenleuchtsystem nach einem der Ansprüche 12 bis 14, das elektronische Bauteile (3), Leiterbahnen und/oder Kühlkörper (4) an dem flexiblen Träger aufweist.

16. Oberflächenleuchtsystem nach einem der Ansprüche 12 bis 15, das mindestens zwei Lichtleiter (7) aufweist, die in benachbarten Randbereichen mit einem optischen Koppelmedium verbunden sind.

17. Oberflächenleuchtsystem nach einem der Ansprüche 12 bis 16, das auf der Strahlung emittierenden Vorderseite mindestens eine strahlungsdurchlässige Folie (9) aufweist.

## Claims

1. Method for mounting a surface luminous system with a front side that emits electromagnetic radiation, comprising the following steps:
- applying at least one primary radiation source (2) suitable for emitting electromagnetic radiation during operation to at least one mounting region (11) of a flexible carrier (1) with a front side and a rear side opposite to the front side, wherein the front side of the flexible carrier (1) defines a reference plane,
- bending the mounting region (11) of the flexible carrier (1) out of the reference plane, in such a way that an optical axis of the primary radiation source runs parallel or inclined with respect to the reference plane,
- applying the flexible carrier (1) to a rigid carrier (5), wherein the rear side of the flexible carrier (1) faces the rigid carrier (5), and
- applying at least one optical waveguide (7) with a radiation-emitting front side (72) and at least one coupling-in region (71) to the flexible carrier (1) in such a way that the primary radiation source (2) radiates into the coupling-in region (71) of the optical waveguide (7) during operation of the surface luminous system and the radiation-emitting front side (72) of the optical waveguide (7) points in the direction of the radiation-emitting front side of the surface luminous system,
wherein rigid supporting elements (51) are formed on the rigid carrier, said supporting elements, when the flexible carrier is placed onto the rigid carrier, bend the mounting region of the flexible carrier from the reference plane into the desired position and hold it there.

2. Method according to Claim 1, wherein
the optical waveguide (7) is applied to the flexible carrier (1) after the flexible carrier (1) has been applied to the rigid carrier (5).

3. Method according to Claim 1, wherein
the optical waveguide (7) is applied to the flexible carrier (1) before the flexible carrier (1) is applied to the rigid carrier (5).

4. Method according to any of the preceding claims,
wherein electronic components (3), conductor tracks and/or heat sinks (4) are applied to the flexible carrier (1).

5. Method according to any of the preceding claims,
wherein a flexible printed circuit board is used as the flexible carrier (1).

6. Method according to any of the preceding claims,
wherein
- at least one mounting region (11) is produced in a targeted manner by providing slots (6) within the flexible carrier (1),
- the primary radiation source (2) is applied to the mounting region (11), and
- the mounting region (11) is bent from the reference plane.

7. Method according to Claim 6, wherein the slots (6) are provided by blanking.

8. Method according to any of the preceding claims,
wherein the supporting elements (51) are lugs bent up from a main reference plane of the rigid carrier (5).

9. Method according to any of the preceding claims,
wherein a light-emitting diode component is used as the primary radiation source (2).

10. Method according to any of the preceding claims,
wherein at least two optical waveguides (7) are used and adjacent edge regions (74) of the optical waveguides (7) are interconnected with an optical coupling medium.

11. Method according to any of the preceding claims,
wherein at least one radiation-transmissive film (9) is applied to the radiation-emitting front side (72) of the optical waveguide (7).

12. Surface luminous system with a radiation-emitting front side comprising:
- at least one primary radiation source (2) suitable for emitting electromagnetic radiation during operation,
- a rigid carrier (5), on which rigid supporting elements (51) are formed,
- at least one flexible carrier (1) with a front side and a rear side opposite to the front side and with at least one mounting region (11) to which the primary radiation source (2) is applied the front side,
wherein the flexible carrier is applied to the rigid carrier such that the rear side of the flexible carrier (1) points to the rigid carrier (5), the front side of the flexible carrier (1) excluding the mounting region (11) defines a reference plane and the mounting region (11) is bent by means of the rigid supporting elements from the reference plane into a desired position and held there, in such a way that an optical axis of the primary radiation source (2) runs parallel or inclined with respect to the reference plane, and
- at least one optical waveguide (7) with a radiation-emitting front side (72) and at least one coupling-in region (71) which is applied to the flexible carrier (1) in such a way that the primary radiation source (2) radiates into the coupling-in region (71) of the optical waveguide (7) during operation of the surface luminous system and the radiation-emitting front side (72) of the optical waveguide (7) points in the direction of the radiation-emitting front side of the surface luminous system.

13. Surface luminous system according to Claim 12, comprising a flexible printed circuit board as the flexible carrier.

14. Surface luminous system according to any of Claims 12 to 13, comprising a light-emitting diode component as the primary radiation source.

15. Surface luminous system according to any of Claims 12 to 14, which has electronic components (3), conductor tracks and/or heat sinks (4) at the flexible carrier.

16. Surface luminous system according to any of Claims 12 to 15, which has at least two optical waveguides (7) which are connected to an optical coupling medium in adjacent edge regions.

17. Surface luminous system according to any of Claims 12 to 16, which has at least one radiation-transmissive film (9) on the radiation-emitting front side.

## Revendications

1. Procédé de montage d'un système lumineux de surface muni d'une face avant émettant un rayonnement électromagnétique, comprenant les étapes suivantes :
- Application d'au moins une source de rayonnement primaire (2) qui est conçue pour, en fonctionnement, émettre un rayonnement électromagnétique, sur au moins une zone de montage (11) d'un support souple (1) muni d'une face avant et d'une face arrière opposée à la face avant, la face avant du support souple (1) définissant un plan de référence,
- Pliage de la zone de montage (11) du support souple (1) hors du plan de référence de telle sorte qu'un axe optique de la source de rayonnement primaire s'étend parallèlement ou en biais par rapport au plan de référence,
- Application du support souple (1) sur un support rigide (5), la face arrière du support souple (1) faisant face au support rigide (5), et
- Application d'au moins un guide de lumière (7) munie d'une face avant (72) d'émission de rayonnement et d'au moins une zone d'injection (71) sur le support souple (1) de telle sorte que la source de rayonnement primaire (2), lorsque le système lumineux de surface est en fonctionnement, injecte son rayonnement dans la zone d'injection (71) du guide de lumière (7) et la face avant d'émission de rayonnement (72) du guide de lumière (7) est dirigée vers la face avant d'émission de rayonnement du système lumineux de surface,
des éléments supports rigides (51) étant formés sur le support rigide, lesquels plient la zone de montage du support souple lors de l'application du support souple sur le support rigide hors du plan de référence dans la position souhaitée et l'y maintiennent.

2. Procédé selon la revendication 1, avec lequel le guide de lumière (7) est appliquée sur le support souple (1) après avoir appliqué le support souple (1) sur le support rigide (5).

3. Procédé selon la revendication 1, avec lequel le guide de lumière (7) est appliquée sur le support souple (1) avant d'appliquer le support souple (1) sur le support rigide (5).

4. Procédé selon l'une des revendications précédentes, avec lequel des composants électroniques (3), des pistes conductrices et/ou des éléments refroidisseurs (4) sont appliqués sur le support souple (1).

5. Procédé selon l'une des revendications précédentes, avec lequel un circuit imprimé souple est utilisé comme support souple (1).

6. Procédé selon l'une des revendications précédentes, avec lequel
- au moins une zone de montage (11) est réalisée volontairement en pratiquant des entailles (6) à l'intérieur du support souple (1),
- la source de rayonnement primaire (2) est appliquée dans la zone de montage (11), et
- la zone de montage (11) est pliée hors du plan de référence.

7. Procédé selon la revendication 6, avec lequel les entailles (6) sont pratiquées par poinçonnage.

8. Procédé selon l'une des revendications précédentes, avec lequel les éléments supports (51) sont des languettes repliées depuis un plan de référence principal du support rigide (5).

9. Procédé selon l'une des revendications précédentes, avec lequel un composant diode électroluminescente est utilisé comme source de rayonnement primaire (2).

10. Procédé selon l'une des revendications précédentes, avec lequel au moins deux guides de lumière (7) sont utilisées et les zones de bordure (74) voisines des guides de lumière (7) sont reliées l'une à l'autre par un moyen de couplage optique.

11. Procédé selon l'une des revendications précédentes, avec lequel au moins un film (9) translucide au rayonnement est appliqué sur la face avant d'émission de rayonnement (72) du guide de lumière (7).

12. Système lumineux de surface muni d'une face avant émettant un rayonnement, comprenant :
- au moins une source de rayonnement primaire (2) qui est conçue pour, en fonctionnement, émettre un rayonnement électromagnétique,
- un support rigide (5) sur lequel sont formés des éléments supports rigides (51),
- au moins un support souple (1) muni d'une face avant et d'une face arrière opposée à la face avant et comprenant au moins une zone de montage (11) sur la face avant de laquelle est appliquée la source de rayonnement primaire (2), le support souple étant appliqué sur le support rigide de telle sorte que la face arrière du support souple (1) fait face au support rigide (5), la face avant du support souple (1), à l'exception de la zone de montage (11), définit un plan de référence et la zone de montage (11) est pliée et maintenue dans une position souhaitée hors du plan de référence au moyen des éléments supports rigides, de telle sorte qu'un axe optique de la source de rayonnement primaire (2) s'étend parallèlement ou en biais par rapport au plan de référence, et
- au moins le guide de lumière (7) munie d'une face avant (72) d'émission de rayonnement et d'au moins une zone d'injection (71), laquelle est appliquée sur le support souple (1) de telle sorte que la source de rayonnement primaire (2), lorsque le système lumineux de surface est en fonctionnement, injecte son rayonnement dans la zone d'injection (71) du guide de lumière (7) et la face avant d'émission de rayonnement (72) du guide de lumière (7) est dirigée vers la face avant d'émission de rayonnement du système lumineux de surface.

13. Système lumineux de surface selon la revendication 12, comprenant un circuit imprimé souple comme support souple.

14. Système lumineux de surface selon l'une des revendications 12 à 13, comprenant un composant diode électroluminescente comme source de rayonnement primaire.

15. Système lumineux de surface selon l'une des revendications 12 à 14, lequel présente des composants électroniques (3), des pistes conductrices et/ou des éléments refroidisseurs (4) sur le support souple.

16. Système lumineux de surface selon l'une des revendications 12 à 15, lequel présente au moins deux guides de lumière (7) qui sont reliées avec un moyen de couplage optique dans les zones de bordure voisines.

17. Système lumineux de surface selon l'une des revendications 12 à 16, lequel présente au moins un film (9) translucide au rayonnement sur la face avant d'émission de rayonnement.
